# FASCICULE DE BREVET EUROPEEN

(11) **EP 0 689 317 B1**
(45) Date de publication et mention de la délivrance du brevet: **07.05.1997**
(21) Numéro de dépôt: 95401211.8
(22) Date de dépôt: 24.05.1995
(51) Int. Cl.: H04L 12/40

(54) **Interface compatible pour installation de commande d'appareils domestiques, industriels et professionnels**
Kompatibelschnittstelle für die Steueranlage von Geräten im Haus, in der Industrie oder in der beruflichen Umgebung
Compatible interface for a control arrangement of devices in the home, industrial or professional environments

(30) Priorité: 24.05.1994 FR 9406280
(43) Date de publication de la demande: 27.12.1995
(73) Titulaire: SGS-THOMSON MICROELECTRONICS S.A., 94250 Gentilly (FR)
(72) Inventeur: Le Van Suu, Maurice Gilbert, F-75116 Paris (FR)
(74) Mandataire: Schmit, Christian Norbert Marie

(56) Documents cités:
- US-A- 4 203 096
- US-A- 4 392 125
- US-A- 4 747 115

## Description

La présente invention concerne une interface compatible pour installation de commande d'appareils domestiques industriels et professionnels applicable notamment à une installation comportant des appareils commandables par des supports de transmission d'informations différents. Plus particulièrement l'invention est applicable aux installations dans lesquelles l'échange d'informations et l'alimentation des appareils se font aussi bien par des liaisons deux fils que par des liaisons quatre fils.

On connaît des installations dans lesquelles l'échange d'informations et l'alimentation des appareils se font par un réseau de deux fils omnibus (appelé bus) desservant tous les appareils. Différentes prises, particulièrement de type prises femelles, sont disséminées dans les différentes pièces d'habitation de l'installation domestique ou industrielle, à raison d'une ou plusieurs prises par pièces. Dans le domaine de l'automobile de tels bus existent également, les raccordements peuvent être directs, sans présence de prises femelles. Le bus relie alors les différentes prises, femelles ou directes, les unes aux autres. Du point de vue de l'alimentation en courant des différentes prises, celles-ci sont alimentées en parallèle. Du point de vue des informations à transmettre, que ce soit les informations émises par un appareil ou les informations destinées à un appareil déterminé, ces informations sont transmises sur le bus à tous les appareils. L'appareil qui reconnaît que l'information lui est destinée, reçoit celle-ci et la prend en compte. Dans ce type de transmission sur deux fils, les signaux d'information modulent l'alimentation en courant.

D'autres appareils sont prévus pour fonctionner avec une transmission à quatre fils. Sur ces quatre fils, deux fils servent à l'alimentation en courant des différents appareils et donc des différentes prises mentionnées précédemment. Les deux autres fils servent à transmettre les informations et servent de bus de transmission d'information. Un câble à quatre fils relie donc les différentes prises de l'installation domestique avec deux fils pour l'alimentation en courant et deux fils de bus d'informations transmettant les informations aux différents appareils de l'installation.

Cependant, une installation prévue avec un type de câblage à deux fils ou à quatre fils ne permet de recevoir que les appareils dont le type de transmission correspond au type de câblage. Cela représente un inconvénient pour la promotion de ce type d'installation.

L'invention concerne un circuit d'interface permettant de brancher sur une installation à quatre fils, aussi bien des appareils prévus pour fonctionner sur une installation à deux fils que des appareils prévus pour fonctionner sur une installation à quatre fils et de transmettre les deux types de transmission de signaux.

L'invention concerne donc une interface compatible pour installation de commande d'appareils domestique qui comprend une ligne omnibus possédant au moins deux premiers fils de ligne servant pour un courant d'alimentation, des signaux d'information étant transmis sur les deux premiers fils et/ou sur deux deuxièmes fils de ligne.

Cette interface comprend :
- un circuit pour reconnaître si des signaux d'informations sont transmis sur les deux premiers fils ou sur les deux deuxièmes fils et pour transmettre un signal d'identification de réception à un appareil domestique ;
- un circuit de régulation de courant connecté aux deux premiers fils pour fournir une alimentation de courant stabilisée même si des signaux d'information sont transmis sur les deux deuxièmes fils.

Une telle interface comporte de préférence :
- deux premières bornes d'entrée connectables aux deux premiers fils de ligne ;
- deux deuxièmes bornes d'entrée connectables aux deux deuxièmes fils de ligne ;
- deux premières bornes de sortie connectées aux deux premières bornes d'entrée et destinées à l'alimentation du type d'appareils fonctionnant normalement en 4 fils ;
- deux deuxièmes bornes de sortie connectées par un circuit de régulation de courant aux deux premières bornes d'entrée et destinées à l'alimentation du type d'appareils fonctionnant normalement en 2-fils ;
- deux troisièmes bornes de sortie connectées aux deuxièmes bornes d'entrée et destinées à la transmission d'information au type d'appareil fonctionnant normalement en 2-fils.

Pour l'émission d'information sur les deux premiers fils de ligne, l'interface comporte un dispositif de modulation connectée aux deux premiers fils d'entrée, ainsi qu'une quatrième borne de sortie permettant à un appareil du deuxième type de transmettre des signaux de commande de modulation.

L'interface comporte également :
- un détecteur de modulation de courant (COMP) connecté à au moins l'une des deux premières bornes d'entrée et détectant des modulations déterminées transmises à cette borne d'entrée ;
- ainsi qu'une sixième borne de sortie connecté à ce détecteur de modulation et permettant de transmettre des signaux modulation détectés à un appareil du premier type.

Les différents objets et caractéristiques de l'invention apparaîtront plus clairement dans la description qui va suivre et dans les figures annexées qui représentent:
- les figures 1a et 1b, des systèmes de transmission pour installations domestiques de types connus ;
- la figure 2, une adaptation schématique de l'objet de l'invention à des installations connues ;
- la figure 3, une organisation générale d'un système de transmission applicable à l'invention ;
- la figure 4, un exemple de circuit d'interface compatible selon l'invention ;
- la figure 5, un exemple de réalisation plus pratique ;
- la figure 6, une variante de réalisation de l'invention.

La figure 1a représente un exemple de transmission de type connu dans laquelle l'alimentation et la transmission d'information aux différents organes et appareils se font uniquement sur deux fils. C'est ainsi, par exemple, qu'un organe de commande B1 fournit l'alimentation électrique sur deux fils f1, f2. Un appareil distant B2 est alimenté en courant. Le fil f2 est par exemple, à la masse et le fil f1 à un potentiel d'alimentation. La transmission d'informations se fait par modulation de l'alimentation en courant. Par exemple, sur la figure 1a, la transmission d'informations se fait par interruptions de l'alimentation, par mise à la masse du fil f1 à l'aide d'un circuit à transistor.

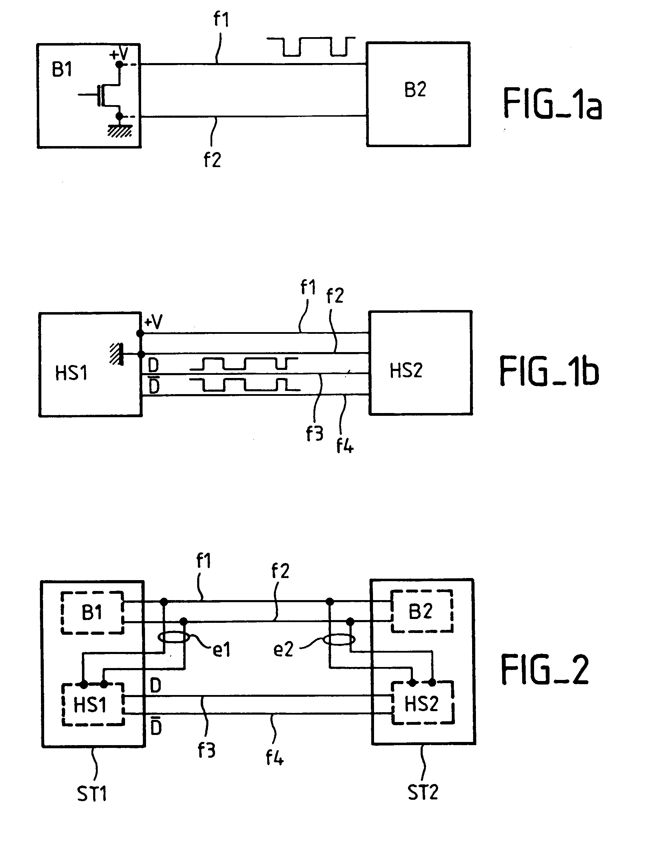

Dans l'installation de la figure 1b, les appareils nécessitent l'utilisation de deux fils f1, f2 pour l'alimentation et de deux fils f3, f4 pour la transmission d'informations. L'organe de commande HS1 fournit donc l'alimentation sur les fils f1 et f2 à l'intention de tout appareil connecté à ces fils tel que HS2. L'échange d'informations entre l'organe HS1 et l'appareil HS2 se fait sous forme de signaux modulés. A titre d'exemple, ces signaux sont complémentaires les uns des autres sur les fils f3 et f4.

Sur la figure 2 on représente un mode de réalisation général selon l'invention. Dans cette installation, les liaisons se font à l'aide de liaisons 4-fils f1 à f4.

Un organe de commande ST1 situé sur la partie gauche de la figure peut comporter soit un organe B1 du type de celui de la figure 1a. Il alimente alors les fils f1 et f2 et transmet des informations sur ces fils. L'organe de commande ST1 peut comporter un organe HS1 du type de la figure 1b soit à la place de l'organe B1 soit en complément. Cet organe HS1 alimente les fils f1 et f2 par la liaison el et transmet des informations sur les fils f3 et f4.

L'installation distante ST2 située sur la partie droite comporte un appareil B2 et/ou un appareil HS2 du type de ceux des figures 1a et 1b respectivement.

L'appareil B2 est alimenté et reçoit (et éventuellement émet) des informations par les fils f1 et f2).

L'appareil HS2 est raccordé aux fils f1 et f2 par une liaison e2 pour son alimentation et aux fils f3 et f4 pour la réception d'informations. Etant raccordé aux fils f1 et f2, il peut également émettre les informations sur ces fils.

Avec une telle organisation on peut donc faire coexister dans une même installation des appareils de types différents en prévoyant un câblage 4-fils.

Selon une variante de réalisation on peut également prévoir un câblage 2-fils. Dans ce cas, l'émission d'informations par l'organe HS1 se fera par la liaison el sur les fils f1, f2. La réception des informations (et éventuellement l'émission) par l'appareil HS2 se fera par la liaison e2.

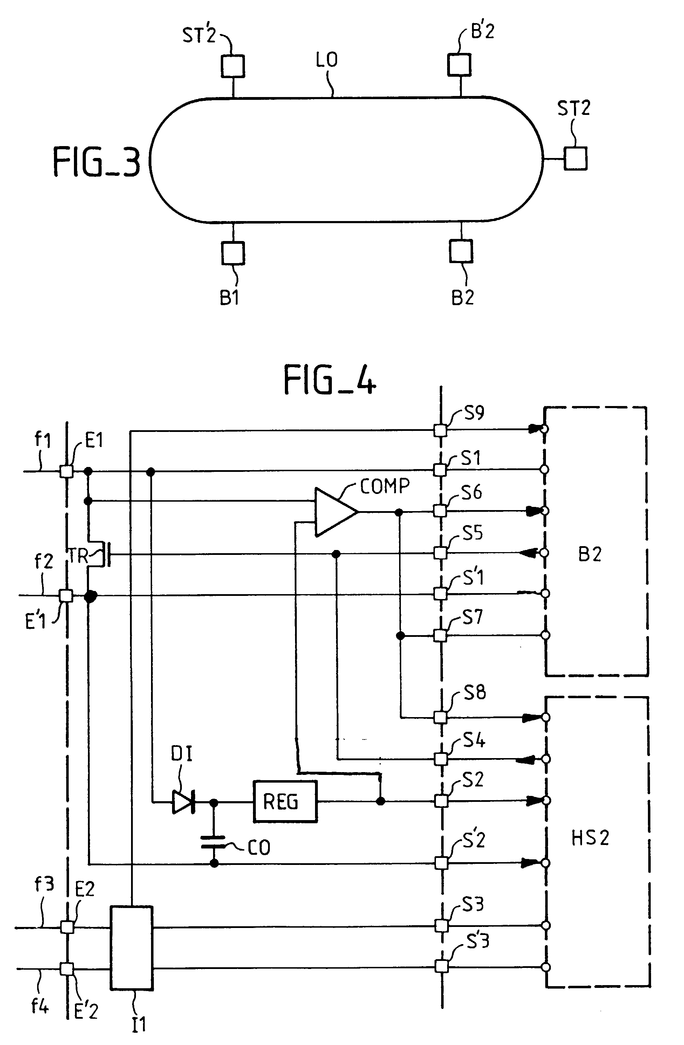

La figure 3 représente une installation dans laquelle une ligne omnibus LO permet de relier un ou plusieurs organes de commande B1 (généralement un organe de commande) à plusieurs appareils à commander B2, B'2, ST2, ST'2. Les organes de commande fournissent l'alimentation électrique à l'ensemble de l'installation. Ils fournissent des signaux d'informations à l'intention des appareils à commander. Ces informations peuvent être des signaux initiateurs de processus ou des signaux d'interrogation en vue d'obtenir des informations au sujet de l'environnement physique qu'il commande.

Les informations émises par un organe de commande sont distribuées à tous les appareils connectés à la ligne omnibus. Ces informations contiennent donc une indication contenant l'identité du ou des appareils auxquels sont destinées ces informations. Les appareils destinataires reconnaissent cette indication d'identité et peuvent alors prendre en compte, pour leur fonctionnement propre, les informations qu'elles reçoivent.

En se reportant à la figure 4, on va maintenant décrire un exemple de réalisation détaillé des circuits d'une interface selon l'invention.

Cette interface comporte deux premières bornes d'entrée E1, E'1 connectables aux fils f1, f2 tels que ceux utilisés en figures 1a et 1b et deux deuxièmes bornes d'entrée E2, E'2 connectables aux fils f3, f4 tels que ceux de la figure 1b.

Les bornes E1, E'1 sont connectées à des bornes de sortie S1, S'1 de l'interface auxquelles peut être connecté un appareil B2 du type de celui de la figure 1a et représenté en pointillé sur la figure 4. Cet appareil B2 peut donc être alimenté et recevoir des signaux d'information.

De plus, les bornes E1 et E'1 sont connectées par l'interface à des bornes de sortie S2, S'2. Cette connexion est réalisée dans l'interface par une diode DI, un condensateur CO et un circuit régulateur REG de façon à fournir un courant stabilisé sur les bornes de sortie S2 et S'2.

Par ailleurs, les bornes d'entrée E2, E'2 sont connectées par un circuit d'adaptation I1 (ou d'interface) aux bornes de sortie S3, S'3.

Un appareil HS2 du type de celui de la figure 1b et représenté en pointillés sur la figure 4, est connecté aux bornes S2, S'2, S3, S'3. L'appareil HS2 peut donc être alimenté en courant par les bornes S2, S'2 et recevoir des informations par les bornes S3, S'3.

Dans l'interface selon l'invention, il est également prévu un circuit comparateur COMP qui détecte la transmission de signaux sur les fils f1, f2. En l'occurrence selon l'exemple de la figure 4, le comparateur COMP détecte les variations de tension sur le fil f1 en comparant la tension du fil f1 à une tension de référence telle que la tension stabilisée fournie par le circuit régulateur REG. Les signaux détectés par le comparateur sont transmis sur des bornes de sortie S6, S7 et S8 vers les deux types d'appareil B2 et HS2. Le comparateur COMP permet ainsi d'informer ces appareils que l'on reçoit des signaux d'information sur les fils f1, f2.

De plus, par la borne S8, l'appareil HS2 peut recevoir des signaux d'information transmis sur les fils f1, f2.

Un circuit de modulation représenté par un transistor TR permet de moduler à partir de l'interface de la figure 4, le courant sur les fils f1, f2. Ce transistor TR peut être commandé par l'appareil B2 qui est connecté à la borne S5 ainsi que par l'appareil HS2 qui est connecté à la borne S4.

Enfin, le circuit I1 peut comporter un circuit de comparaison comparant les signaux sur les fils f3 et f4 et fournir en échange un signal d'information sur la bornes de sortie S9 à laquelle est connecté l'appareil B2.

On voit donc que l'interface selon l'invention permet :
- d'alimenter en courant les appareils des deux types B2 et HS2 à partir de l'alimentation fournie sur les fils f1 et f2, que cette alimentation soit modulée ou non ;
- transmettre des signaux sur fils f3 et f4 que ce soit vers un appareil du type B2 ou HS2 ;
- émettre à partir d'un appareil B2 ou HS2 des signaux sur les fils f1 et f2.

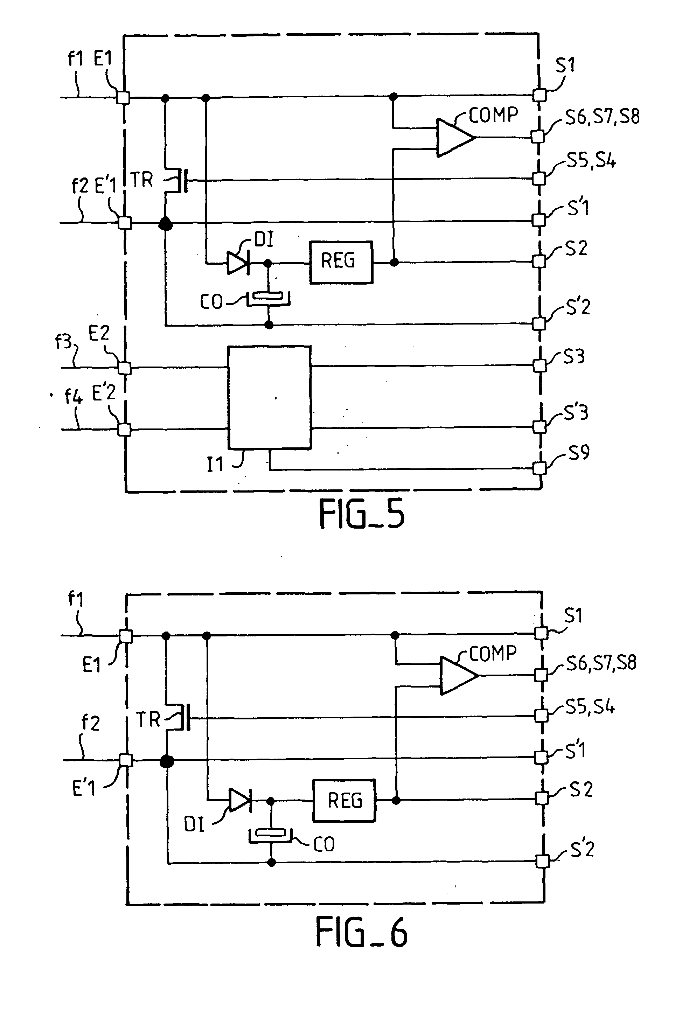

La figure 5 représente une interface similaire à celle de la figure 4, mais on a réduit le nombre de bornes de sortie. C'est ainsi qu'on a rendue communes les bornes de sortie S4, S5 d'une part et S6, S7, S8 d'autre part. La borne de sortie S9 pourrait être rendue commune avec les bornes S6, S7, S8 par un découplage approprié. La réduction du nombre de sorties dépend du type de connecteurs que l'on désire utiliser et du nombre de broches qu'ils possèdent.

L'interface selon l'invention peut être réalisée dans un connecteur de façon à être placé sur la ligne omnibus. Les quatre bornes d'entrée E1, E'1, E2, E'2 sont connectées à la ligne omnibus. Les bornes de sorties S1 à S9 se présentent sous forme de broches auxquelles on vient connecter un appareil.

L'interface peut être également réalisée dans un boîtier se présentant sous forme d'un adaptateur que l'on vient enficher sur un connecteur placé sur la ligne omnibus, l'enfichage se faisant par les broches d'entrée (bornes d'entrée) E1, E'1, E2, E'2. La connexion d'un appareil se fait par connexion aux bornes S1 à S9.

Selon une variante de réalisation, il est également possible de prévoir une transmission par deux fils f1, f2 seulement. Dans ce cas, l'alimentation électrique de l'appareil B2 ainsi que l'échange d'informations avec cet appareil se fait par les fils f1, f2 comme décrit précédemment. En ce qui concerne l'appareil HS2, il est alimenté par les fils f1, f2 et le système de régulation décrit. La réception d'informations se fait par le comparateur COMP et l'émission d'informations se fait à l'aide du transistor TR comme, cela est également décrit.

A titre d'exemple, l'invention est applicable à une installation comportant des appareils de type "BATI-BUS" alimentés en courant et transmettant les informations par deux fils et/ou des appareils au standard "HOMESYSTEM" alimentés par deux fils et prévoyant l'échange d'informations par deux autres fils, et/ou de type EIBUS (en Allemagne), AX10 et SMARTHOUSE (aux Etats Unis d'Amérique), HDB (au Japon).

Ce type d'approche peut être étendu au multiplexage de transfert de données dans le domaine de la voiture actuellement standardisé sous les appellations VAN (Vehicule Area Network en France), CAN (Communication Are Network en Allemagne), et J 1850 (Aux Etats Unis d'Amérique).

## Revendications

1. Interface compatible pour installation de commande d'appareils domestiques ou industriels ou professionnels, installation qui comprend un bus (LO) à deux fils possédant au moins deux premiers fils de ligne (f1, f2) servant pour un courant d'alimentation, des signaux d'information étant transmis sur ces deux premiers fils, ou un bus à quatre fils, des signaux d'informations étant transmis dans ce cas sur deux deuxièmes fils de ligne (f3, f4) caractérisé en ce qu'elle comprend:
- un circuit (COMP, I1) pour reconnaître si des signaux d'informations sont transmis sur les deux premiers fils ou sur les deux deuxièmes fils et pour transmettre (S6, S9) un signal d'identification de réception à un appareil domestique;
- un circuit de régulation de courant (REG) connecté aux deux premiers fils (f1, f2) pour fournir (S2, S'2) une alimentation de courant stabilisée à l'appareil même si des signaux d'information sont transmis sur les deux premiers fils;
- et un circuit de commande (TR) connecté aux deux premiers fils pour moduler le courant sur ces deux premiers fils en fonction d'un signal qui lui est transmis (S4,S5) par l'appareil.

2. Interface selon la revendication 1, destinée soit à alimenter un premier type d'appareil domestique (B2) compatible avec un bus à deux fils et à transmettre des informations par les deux premiers fils (f1, f2) vers ce premier type d'appareil domestique, soit à alimenter par les deux premiers fils (f1, f2) un deuxième type d'appareil domestique compatible avec un bus à quatre fils (HS2) et à transmettre en plus des informations par les deux deuxièmes fils (f3, f4) vers ce deuxième type d'appareil domestique, caractérisée en ce que ladite interface comprend:
- deux premières bornes d'entrée (E1, E'1) connectables aux deux premiers fils de ligne (f1, f2);
- deux deuxièmes bornes d'entrée (E2, E'2) connectables aux deux deuxièmes fils de ligne (f3, f4);
- deux premières bornes de sortie (S1, S'1) connectées aux deux premières bornes d'entrée et destinées à l'alimentation du premier type d'appareil;
- deux deuxièmes bornes de sortie (S2, S'2) connectées par un circuit de régulation de courant aux deux premières bornes d'entrée et destinées à l'alimentation du deuxième type d'appareil;
- deux troisièmes bornes de sortie (S3, S'3) connectées aux deuxièmes bornes d'entrée et destinées à la transmission d'information au deuxième type d'appareil.

3. Interface selon la revendication 2, caractérisée en ce qu'elle comporte un dispositif de modulation (TR) connecté aux deux premiers fils d'entrée, ainsi qu'une quatrième borne de sortie (S4) permettant à un appareil de deuxième type (HS2), envoyant sur cette borne des signaux de commande de modulation, de transmettre des signaux sur le bus à deux fils.

4. Interface selon la revendication 3, caractérisée en ce qu'elle comporte une cinquième borne de sortie (S5) permettant à un appareil du premier type (B2) de transmettre un signal de commande de modulation.

5. Interface selon la revendication 3 ou la revendication 4, caractérisée en ce que le dispositif de modulation comporte un transistor (TR) permettant de court-circuiter les deux premières bornes d'entrée (f1, f2).

6. Interface selon la revendication 2, caractérisée en ce qu'elle comporte:
- un détecteur de modulation de courant (COMP) connecté à au moins l'une des deux premières bornes d'entrée et détectant des modulations déterminées transmises à cette borne d'entrée;
- ainsi qu'une sixième borne de sortie (S6) connectée à ce détecteur de modulation et permettant de transmettre des signaux de modulation détectés à un appareil du premier type.

7. Interface selon la revendication 6, caractérisée en ce qu'elle comporte une septième et une huitième bornes de sortie (S7, S8) connectées au dispositif de modulation et permettant de transmettre un signal de détection respectivement vers un appareil du premier type et vers un appareil du deuxième type.

8. Interface selon l'une des revendications précédentes, caractérisée en ce que le bus à deux fils est équipé en différents points de connecteurs pour la connexion d'appareils, chaque connecteur possédant une interface et présentant autant de bornes de sortie que l'interface en possède.

9. Interface selon l'une des revendications 1 à 7, caractérisée en ce que le bus à deux fils est équipé en différents points de connecteurs pour la connexion d'appareils, chaque connecteur possédant autant de broches de connexion que le bus possède de fils utiles, l'interface étant dans un boîtier de connexion, et des appareils étant connectables aux bornes de sortie de l'interface.

10. Interface selon la revendication 2, caractérisé en ce qu'elle comporte un circuit de réception (I1) connecté aux deuxièmes bornes d'entrée et fournissant des signaux d'informations sur les troisièmes bornes de sortie vers le deuxième type d'appareil ou sur une neuvième borne de sortie (S9) vers le premier type d'appareil.

## Patentansprüche

1. Kompatible Schnittstelle für eine Steueranlage für Geräte im Haus, im Gewerbe oder in der beruflichen Umgebung, wobei die Anlage einen zweiadrigen Bus (LO) mit wenigstens zwei ersten Leitungsadern (f1, f2), die für einen Versorgungsstrom dienen, und wobei Informationssignale auf diesen zwei ersten Adern übertragen werden, oder einen vieradrigen Bus umfaßt, wobei Informationssignale in diesem Fall auf zwei zweiten Leitungsadern(f3, f4) übertragen werden,
gekennzeichnet durch:
- eine Schaltung (COMP, I1) zum Erkennen, ob Informationssignale auf den zwei ersten Adern oder den zwei zweiten Adern übertragen werden, und zum Übertragen (S6, S9) eines Empfangsidentifikationssignals an ein Hausgerät;
- eine Stromregelschaltung (REG), die an die zwei ersten Adern (f1, f2) angeschlossen ist, um dem Gerät eine stabilisierte Stromversorgung zu liefern (S2, S'2),auch wenn Informationssignale auf den zwei ersten Adern übertragen werden;
- und eine Steuerschaltung (TR), die an die zwei ersten Adern angeschlossen ist, um den Strom auf diesen zwei ersten Adern in Abhängigkeit von einem vom Gerät an sie übertragenen (S4, S5) Signal zu modulieren.

2. Schnittstelle nach Anspruch 1, vorgesehen entweder zum mit Strom Versorgen einer ersten Art Hausgerät (B2), das mit einem zweiadrigen Bus kompatibel ist, und zum Übertragen von Informationen über die zwei ersten Adern (f1, f2) an diese erste Art Hausgerät, oder zum mit Strom Versorgen einer zweiten Art Hausgerät, die mit einem vieradrigen Bus kompatibel ist (HS2) über die zwei ersten Adern (f1, f2) und zusätzlich zum Übertragen von Informationen über die zwei zweiten Adern (f3, f4) an diese zweite Art Hausgerät, dadurch gekennzeichnet, daß die Schnittstelle umfaßt:
- zwei erste Eingangsanschlüsse (E1, E'1), die an die zwei ersten Leitungsadern (f1, f2) anschließbar sind;
- zwei zweite Eingangsanschlüsse (E2, E'2), die an die zwei zweiten Leitungsadern (f3, f4) anschließbar sind;
- zwei erste Ausgangsanschlüsse (S1, S'1), die an die zwei ersten Eingangsanschlüsse angeschlossen und für die Stromversorgung der ersten Art Gerät vorgesehen sind;
- zwei zweite Ausgangsanschlüsse (S2, S'2) , die über eine Stromregelschaltung mit den zwei ersten Eingangsanschlüssen verbunden sind und für die Stromversorgung der zweiten Art Gerät vorgesehen sind;
- zwei dritte Ausgangsanschlüsse (S3, S'3), die mit den zweiten Eingangsanschlüssen verbunden sind und vorgesehen sind für die Übertragung von Informationen an die zweite Art Gerät.

3. Schnittstelle nach Anspruch 2, dadurch gekennzeichnet, daß sie eine Modulationsvorrichtung (TR) umfaßt, die an die zwei ersten Eingangsadern angeschlossen ist, sowie einen vierten Ausgangsanschluß (S4), der es einem Gerät der zweiten Art (HS2), das über diesen Anschluß Modulationssteuersignale sendet, ermöglicht, Signale auf dem zweiadrigen Bus zu übertragen.

4. Schnittstelle nach Anspruch 3, dadurch gekennzeichnet, daß sie einen fünften Ausgangsanschluß (S5) umfaßt, der es einem Gerät der ersten Art (B2) ermöglicht, ein Modulationssteuersignal zu übertragen.

5. Schnittstelle nach Anspruch 3 oder Anspruch 4, dadurch gekennzeichnet, daß die Modulationsvorrichtung einen Transistor (TR) umfaßt, mit dem die zwei ersten Eingangsanschlüsse (f1, f2) kurzgeschlossen werden können.

6. Schnittstelle nach Anspruch 2, dadurch gekennzeichnet, daß sie umfaßt:
- einen Strommodulationsdetektor (COMP), der an wenigstens einen der zwei ersten Eingangsanschlüsse angeschlossen ist und bestimmte an diesen Eingangsanschluß übertragene Modulationen erfaßt;
- sowie einen sechsten Ausgangsanschluß (S6), der an den Modulationsdetektor angeschlossen ist und es ermöglicht, erfaßte Modulationssignale an ein Gerät der ersten Art zu übertragen.

7. Schnittstelle nach Anspruch 6, dadurch gekennzeichnet, daß sie einen siebten und einen achten Ausgangsanschluß (S7, S8) umfaßt, die an die Modulationsvorrichtung angeschlossen sind, und es ermöglichen, ein Erfassungssignal jeweils an ein Gerät der ersten Art bzw. ein Gerät der zweiten Art zu übertragen.

8. Schnittstelle nach einem der vorhergehenden Ansprüche, dadurch gekennzeichnet, daß der zweiadrige Bus an verschiedenen Stellen mit Verbindern zum Anschließen von Geräten versehen ist, wobei jeder Verbinder eine Schnittstelle umfaßt und genauso viele Ausgangsanschlüsse aufweist, wie die Schnittstelle besitzt.

9. Schnittstelle nach einem der Ansprüche 1 bis 7, dadurch gekennzeichnet, daß der zweiadrige Bus an verschiedenen Stellen mit Verbindern zum Anschließen von Geräten versehen ist, wobei jeder Verbinder genauso viele Anschlußstifte besitzt, wie der Bus nutzbare Adern besitzt, wobei die Schnittstelle sich in einem Verbindungsgehäuse befindet, und Geräte an die Ausgangsanschlüsse der Schnittstelle anschließbar sind.

10. Schnittstelle nach Anspruch 2, dadurch gekennzeichnet, daß sie eine Empfangsschaltung (I1)umfaßt, die an die zweiten Eingangsanschlüsse angeschlossen ist und Informationssignale über die dritten Ausgangsanschlüsse an die zweite Art Gerät oder über einen neunten Ausgangsanschluß (S9) an die erste Art Gerät liefert.

## Claims

1. Interface compatible for an installation for controlling domestic, industrial or professional appliances, an installation which comprises a two-wire bus (LO) having at least two first line wires (f1, f2) used for a supply current, information signals being transmitted on these two first wires, or a four-wire bus, information signals being transmitted in this case on two second line wires (f3, f4), characterised in that it comprises:
- a circuit (COMP, I1) for recognising whether information signals are transmitted on the two first wires or the two second wires and for transmitting (S6, S9) a reception identification signal to a domestic appliance;
- a current regulation circuit (REG) connected to the two first wires (f1, f2) in order to provide (S2, S'2) a stabilised current supply to the appliance even if the information signals are transmitted on the two first wires;
- and a control circuit (TR) connected to the two first wires in order to modulate the current on these two first wires in accordance with a signal which is transmitted (S4, S5) to it by the appliance.

2. Interface according to Claim 1, designed either to supply a first type of domestic appliance (B2) compatible with a two-wire bus and to transmit information via the two first wires (f1, f2) to this first type of domestic appliance, or to supply via the two first wires (f1, f2) a second type of domestic appliance compatible with a four-wire bus (HS2) and additionally to transmit information via the two second wires (f3, f4) to this second type of domestic appliance, characterised in that the said interface comprises:
- two first input terminals (E1, E'1) connectable to the two first line wires (f1, f2);
- two second input terminals (E2, E'2) connectable to the two second line wires (f3, f4);
- two second output terminals (S1, S'1) connected to the two first input terminals and designed to supply power to the first type of appliance;
- two second output terminals (S2, S'2) connected via a current regulation circuit to the two first input terminals and designed to supply power to the second type of appliance;
- two third output terminals (S3, S'3) connected to the second input terminals and designed to transmit information to the second type of appliance.

3. Interface according to Claim 2, characterised in that it has a modulation device (TR) connected to the two first input wires, and a fourth output terminal (S4) enabling an appliance of the second type (HS2), sending modulation control signals on this terminal, to transmit signals on the two-wire bus.

4. Interface according to Claim 3, characterised in that it has a fifth output terminal (S5) enabling an appliance of the first type (B2) to transmit a modulation control signal.

5. Interface according to Claim 3 or Claim 4, characterised in that the modulation device has a transistor (TR) making it possible to short-circuit the two first input terminals (f1, f2).

6. Interface according to Claim 2, characterised in that it has:
- a current modulation detector (COMP) connected to at least one of the two first input terminals and detecting given modulations transmitted to this input terminal;
- and a sixth output terminal (S6) connected to this modulation detector and making it possible to transmit detected modulation signals to an appliance of the first type.

7. Interface according to Claim 6, characterised in that it has a seventh and an eighth output terminal (S7, S8) connected to the modulation device and making it possible to transmit a detection signal respectively to an appliance of the first type and to an appliance of the second type.

8. Interface according to one of the preceding claims, characterised in that the two-wire bus is equipped at different points with connectors for the connection of appliances, each connector having an interface and having as many output terminals as the interface.

9. Interface according to one of Claims 1 to 7, characterised in that the two-wire bus is equipped at different points with connectors for the connection of appliances, each connector having as many connection pins as the bus has usable wires, the interface being in a connection box, and appliances being connectable to the output terminals of the interface.

10. Interface according to Claim 2, characterised in that it has a reception circuit (I1) connected to the second input terminals and supplying information signals on the third output terminals to the second type of appliance or on a ninth output terminal (S9) to the first type of appliance.
